# EUROPEAN PATENT SPECIFICATION

(11) **EP 1 602 303 B1**
(45) Date of publication and mention of the grant of the patent: **23.03.2011**
(21) Application number: 05104352.9
(22) Date of filing: 23.05.2005
(51) Int. Cl.: A47C 27/20, A47C 23/00

(54) **Springing device particularly for mattresses**
Matratzenfederung
Dispositif d'amortissement pour matelas

(30) Priority: 04.06.2004 IT TV20040065
(43) Date of publication of application: 07.12.2005
(73) Proprietor: ENNEREV MATERASSI S.P.A., 31040 Volpago Del Montello TV (IT)
(72) Inventor: Citron, Marco, 31040 NERVESA DELLA BATTAGLIA TV (IT)
(74) Representative: Modiano, Micaela Nadia

(56) References cited:
- EP-A- 0 653 174
- DE-U- 20 318 336

## Description

The present invention relates to a springing device, particularly for mattresses or for armchairs and/or seats and/or sofas and therefore for products requiring a chosen deformability when a part of the body of a user sits, lies or rests thereon.

Springing devices, particularly for mattresses, are currently used which are constituted by a set of helical springs, which are arranged side-by-side and are connected upward and downward by metal coils.

Such springs are accommodated in a structure that is generally shaped like a parallelepiped and in which the faces are usually constituted by one or more sheets of elastically deformable synthetic material covered by an external cover made of fabric.

The main drawback of these known types of springing device is that the springs are all connected to each other by means of said metallic coils, and therefore pressure in a given region produces a deformation that affects an extensive adjacent region.

Because of this behavior, this known type of springing device deforms by combining the various deformations imposed by all the various regions of the body of the user and does not allow the backbone to assume an anatomically correct position.

Further, currently there is a strongly felt need, among certain groups of consumers, to not have metallic elements in the immediate proximity of the body during sleep, in order to prevent said elements from conveying any potentially harmful electromagnetic fields that are present in the environment; known springing devices, due to the presence of the springs and of the metallic coils, which are typically electric conductors, do not meet this need.

Springing devices of the so-called pocket-spring type are also known which comprise a series of helical springs arranged side-by-side and individually enclosed in pockets, generally made of synthetic material, which are mainly designed to prevent an intersection, and therefore a possible interlocking, of multiple series of contiguous springs.

It is thus possible to arrange springs having a different elastic constant in distinct and different regions of the mattress, in order to offer a different resistance to deformation to the various parts of the body of the user.

The main drawback of these known types of springing device is that the number of springs required to provide adequate support to the various parts of the body of the user, and consequently the number of pockets, are high, with the consequent recycling problems that this entails, in particular the fact of requiring a long time to extract the springs from the pockets.

Mattresses are also known which are constituted by one or more sheets of latex foam or polyurethane foams with the interposition, in some embodiments, of one or more layers of elastically compressible material in order to obtain particular deformability characteristics.

In these known types of mattress, springing is obtained from the mass of the foam itself, which is elastically deformable and adapts very well to the shape of the body of the user, allowing the user to maintain a correct position during sleep.

The main drawback of these known types of springing device is that latex is scarcely permeable to liquids and vapor, and therefore in order to avoid the formation of mold it has to be aired and overturned very frequently, with the inconvenience that this entails, especially in the case of double mattresses; this drawback further prevents the use of mattresses characterized by these springing devices in beds in which the support of the mattress does not allow good circulation of air around the mattress.

Another drawback that is common to all of the previously cited known types is that once they are fitted on a mattress it is not possible to change their support characteristics when the user changes.

EP 0653 174 discloses a springing device as defined in the preamble of claim 1.

The aim of the present invention is to solve the above-mentioned problems, eliminating the drawbacks of the cited background art, by providing a device that adapts in an optimum manner to the anatomy of the user, providing in particular an anatomically correct support to the user's backbone.

Within this aim, an object of the present invention is to provide a device that can be recycled easily at the end of its life cycle.

Another object is to provide a device that does not require particular care or maintenance during its normal use.

Another object is to provide a device that does not have metallic parts.

Another object is to provide a mattress whose support characteristics can be modified according to the requirements of the user.

Another object is to provide a device that allows to achieve optimum springing also of a support on which a mattress is to be positioned.

Another object is to provide a device that is structurally simple and has low manufacturing costs.

This aim and these and other objects that will become better apparent hereinafter are achieved by a springing device, particularly for mattresses, as defines in claim 1.

Further characteristics and advantages of the invention will become better apparent from the following detailed description of a particular but not exclusive embodiment thereof, illustrated by way of non-limiting example in the accompanying drawings, wherein:
Figure 1 is a perspective view of a cutout of a mattress to which a springing device according to the invention is applied;
Figure 2 is a perspective view of an elastically deformable module of a springing device according to the invention, connected to a connecting element;

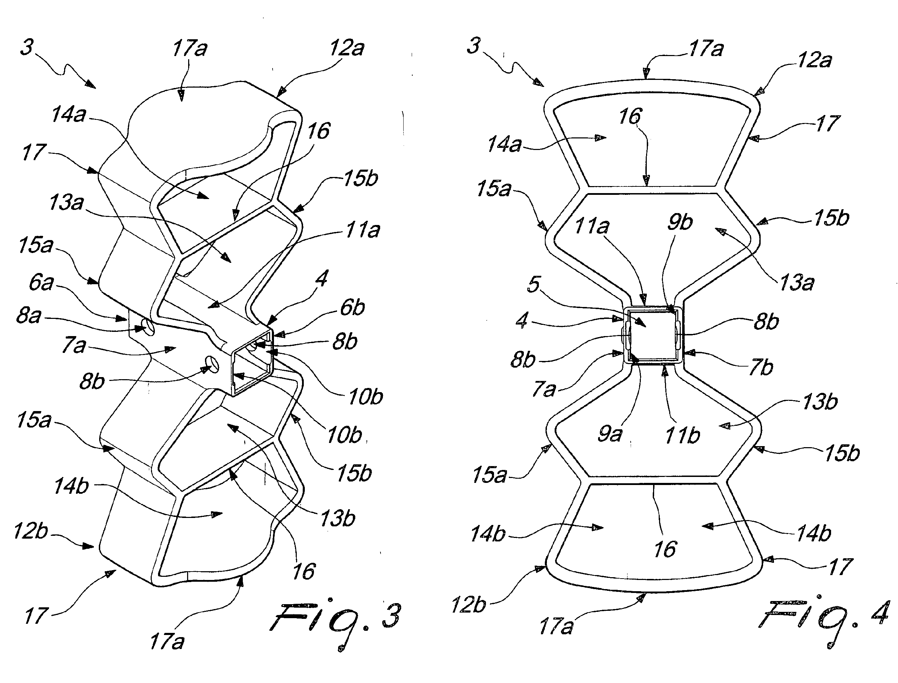

Figure 3 is a perspective view of an elastically deformable module of a springing device according to the invention;
Figure 4 is a front view of the elastically deformable module of Figure 3;

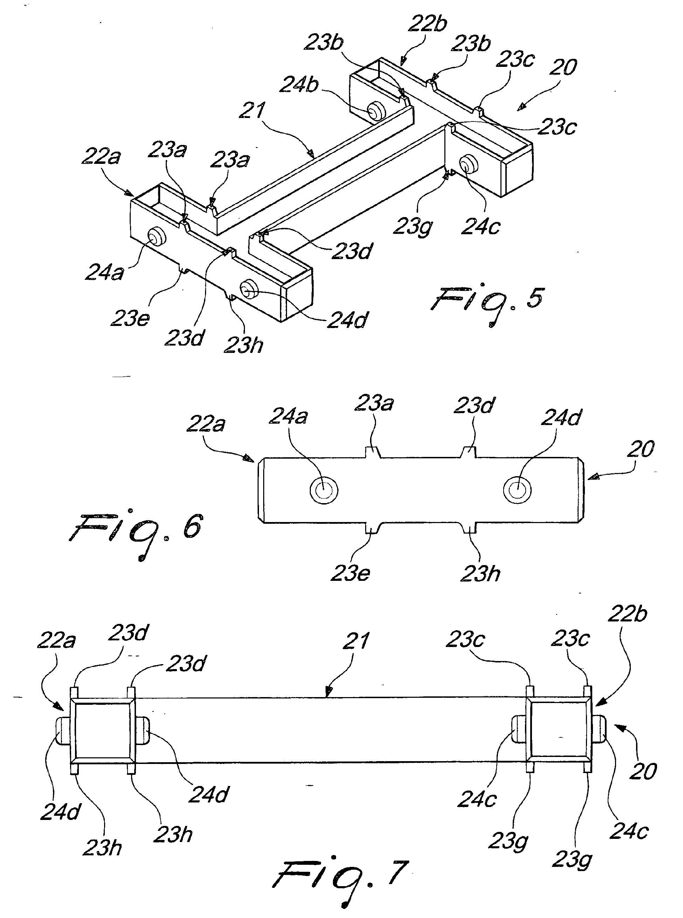

Figure 5 is a perspective view of a connecting element of a springing device according to the invention;
Figure 6 is a side view of the connecting element of Figure 5;
Figure 7 is a front view of the connecting element of Figure 5;
Figure 8 is a perspective view of a portion of a springing device according to the invention;
Figure 9 is a plan view of a portion of a springing device according to the invention.

In the embodiments that follow, individual characteristics, given in relation to specific examples, may actually be interchanged with other different characteristics that exist in other embodiments.

Moreover, it is noted that anything found to be already known during the patenting process is understood not to be claimed and to be the subject of a disclaimer.

With reference to the figures, the reference numeral 1 designates a springing device, particularly for mattresses, designated by the reference numeral 2.

The springing device 1 comprises a plurality of elastically deformable modules 3, which are arranged longitudinally and mutually side-by-side so as to form a plurality of contiguous rows, which are mutually connected, in a direction that lies transversely to the deformation direction of the modules 3, by way of rigid interconnection means, which are arranged advantageously in an alternating and echelon formation in plan view.

Each one of the modules 3, obtained advantageously by molding recyclable plastic material, such as for example polyurethane, has a first central body 4, which is shaped like a parallelepiped and forms an axial seat 5, which has a substantially square plan shape and is open at its ends 6a and 6b.

Two pairs of first and second holes 8a and 8b are formed in two first mutually opposite side walls 7a and 7b of the first central body 4, are adjacent to the ends 6a and 6b, and have the same axis in pairs.

The first side walls 7a and 7b are provided internally, on first surfaces 9a and 9b, with longitudinal grooves 10a and 10b, which run respectively from the ends 6a and 6b up to the pairs of first holes 8a and 8b.

The first central body 4 is also constituted by second walls 11a and 11b, which are perpendicular to the first side walls 7a and 7b and are also designed respectively as upper and lower walls; elastic supporting means, advantageously constituted by elastic bodies 12a and 12b, are rigidly coupled to the second walls and are provided at the front with an approximately figure-of-eight profile so as to form first cavities 13a and 13b and second cavities 14a and 14b, which run along the longitudinal axis of the first central body 4, such elastic bodies being mirror-symmetrical with respect to a central plane that lies longitudinally to the first central body 4.

Each one of the elastic bodies 12a and 12b is composed of two wings 15a and 15b, which are approximately V-shaped with the vertex directed outward; a first end of the wings 15a and 15b is associated with the edges of the first central body 4, and a second end of said wings is connected simultaneously to a transverse tension element 16 and to a dome 17 that is approximately shaped like an inverted letter U.

The dome 17 has an approximately flat base 17a, with an approximately circular plan shape in order to increase the surface for contact for example with a first layer of elastically deformable material 18 arranged inside a case 19 that constitutes the mattress 2.

The rigid interconnection means are constituted advantageously by a connecting element 20, which is obtained advantageously by molding a recyclable plastic material, for example polypropylene.

The connecting element 20 has an approximately H-like plan shape and is constituted by a second central rod-like body 21, which has a cross-section shaped approximately like a double letter T that is arranged opposite with respect to the stem.

The second central body 21 is connected at its ends to two second arms 22a and 22b, which are also rod-like and have a cross-section that is approximately shaped like a double T that is arranged opposite with respect to the stem; the second arms 22a and 22b are perpendicular to the second central body 21.

The second arms 22a and 22b are can be inserted partially by snap action within the seat 5 of the first central body 4 of a module 3.

Eight pairs of lugs 23a, 23b, 23c, 23d, 23e, 23f, 23g, 23h are provided in the second arms 22a and 22b, at axes that are perpendicular to longitudinal axes of the second central body 21 that are adjacent to the region for interconnection to the second central body 21; such lugs are shaped approximately like a right-angled trapezoid and protrude from the edges of the second arms 22a and 22b approximately at right angles to the plane of arrangement of the connecting element 20.

Four pairs of studs 24a, 24b, 24c and 24d protrude from the second arms 22a and 22b at axes that are longitudinal with respect to the second central body 21 and are adjacent to the axes of arrangement of the pairs of lugs; the studs are approximately cylindrical and protrude from the mutually opposite lateral surfaces of each one of the second arms 22a and 22b.

The four pairs of studs 24a, 24b, 24c and 24d have shapes that allow them to be inserted temporarily with a snap action within the pairs of first holes 8a and second holes 8b formed in the first lateral walls 7a and 7b of the first central body 4.

Further, the height of the four pairs of studs is greater than the thickness of the first side walls 7a and 7b of the first central body 4, and their diameter is approximately equal to the width of the longitudinal grooves 10a and 10b formed in the first central body 4.

Each one of the modules 3 is capable of deforming elastically, when compressed, along a direction that is approximately perpendicular to the second upper and lower walls 11a and 11b of the first central body 4.

During this compression, the wings 15a and 15b of the elastic bodies 12a and 12b flex elastically, allowing the movement of the tension elements 16 toward the second upper and lower walls 11a and 11b, and the domes 17 undergo an elastic deformation, moving their bases 17a toward the tension elements 16.

During the compression, the elastic bodies 12a and 12b accumulate elastic energy in the form of internal tensions; said energy is discharged, when compression is released, by making them return to their original shape; therefore, each one of the modules 3 acts like two helical springs that are connected to each other at one end and are free to undergo deformation along the same axis.

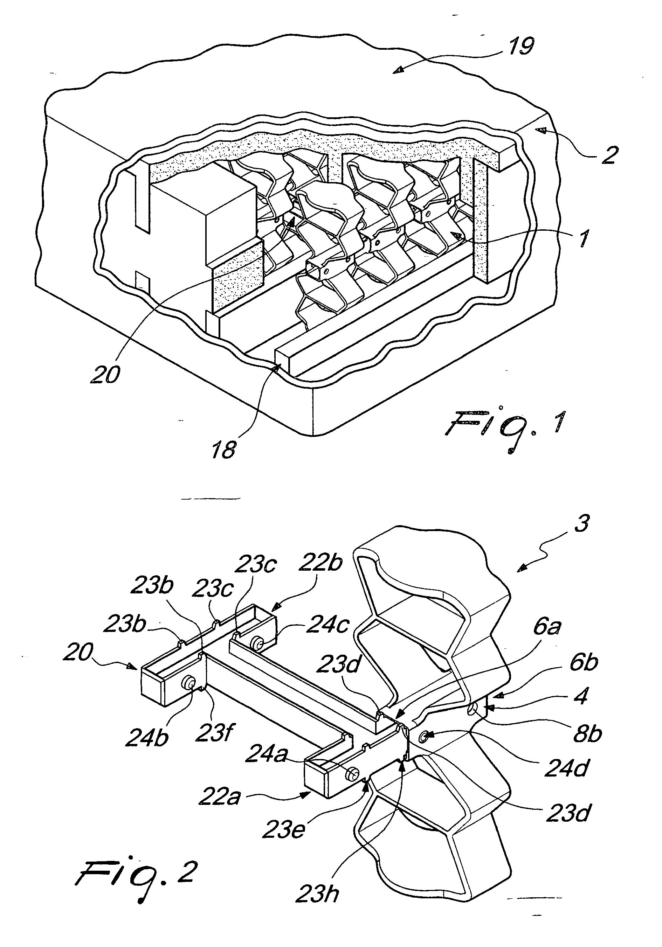

With reference to Figure 2, the second arm 22a of a connecting element 20 is inserted, for example through the end 6a, in the seat 5 of the first central body 4 of a module 3.

The studs 24d of the second arm 22a are guided, through the grooves 10a, into the first holes 8a of the first central body 4, where they enter, locking the connecting element 20 to the module 3.

The insertion of the second arm 22a in the seat 5 is limited by the engagement of the lugs 23d with the edges of the end 6a of the first central body 4.

The second arm 22a or 22b of an additional connecting element 20 can therefore be inserted in the seat 5 of the module 3 of Figure 2, at the end 6b.

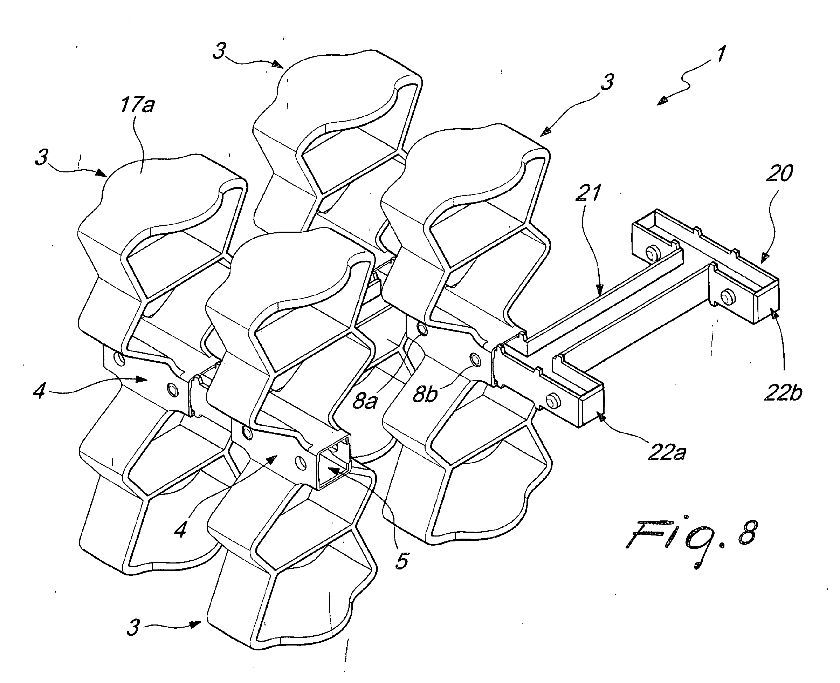

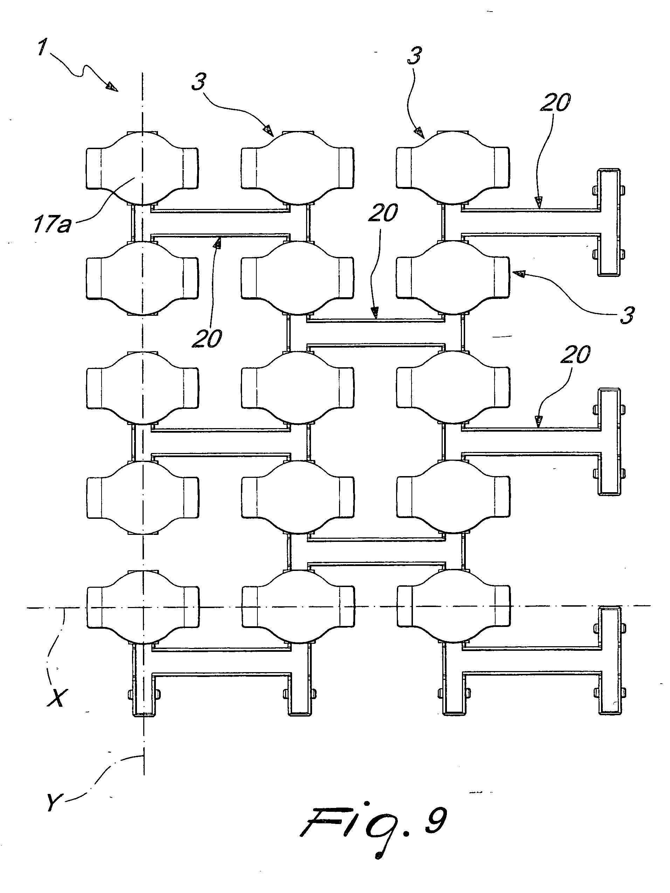

With reference to Figures 8 and 9, each module 3 can be connected to two separate connecting elements 20; in particular, the connecting elements 20 are arranged so that they are sequentially staggered and therefore so that their second central bodies 21 lie on opposite sides with respect to the longitudinal axis of the first central body 4 of the module 3 to which they are fixed.

Further, by connecting to each other a plurality of modules 3 according to this criterion, it is possible to obtain a springing device 1 that has a substantially echelon-like structure.

The echelon-like structure, therefore, is constituted by a plurality of parallel rows of various modules 3, in which the first central bodies 4 are arranged along a same axis Y and are connected in pairs, along the same axis, by the second arms 22a and 22b of a connecting element 20; the interconnection between rows of mutually adjacent modules 3, which are accordingly arranged at axes that are parallel to the axis Y, therefore occurs by interconnecting, along a transverse axis X, modules 3 by means of the connecting elements 20.

Each one of the modules 3 of the springing device 1 thus provided is capable of undergoing deformation substantially independently of the others although the device retains a monolithic structure, which ensures the absence of deformations on the plane of arrangement of the device 1.

The springing device 1 thus provided can therefore be arranged inside the frame of a mattress 1 or of a seat and/or of a back of a sofa or armchair.

It has thus been found that the invention has achieved the intended aim and objects, a springing device particularly for mattresses having been provided that adapts in an optimum manner to the anatomy of the user, since each module that composes it is free to undergo deformation independently of the others, adapting to the various regions of the body of said user.

Moreover, the various rows of modules do not influence the adjacent rows in their partial or complete deformation.

Further, the modular structure of the invention allows to assemble and disassemble it very easily; this simplifies the process for disposal and sorted recycling at the end of its life cycle, and allows faster application to a mattress, optionally allowing even the user to assemble the device on his own starting from the modules and connecting elements.

Moreover, the springing device does not contain metallic parts that can convey any potentially harmful electromagnetic fields that are present in the environment.

The invention is of course susceptible of numerous modifications and variations, so for as within the scope of the appended claims.

Thus, for example, it is possible to provide an elastically deformable module that is provided with a single elastic body, which can be used for example where a unidirectional support action is sufficient, such as in seats or backs of sofas or armchairs.

Further, more or less rigid plugs, not shown in the cited figures, are inserted within the first and/or second cavities of the elastic bodies in order to limit the deformability of such elastic bodies and thus vary at will the rigidity of the individual modules.

The illustrated solution can also be used in a sofa bed as an element for achieving the springing of a support, for example made of felt or polyurethane foam, for a mattress.

The materials used, as well as the dimensions that constitute the individual components of the invention, may of course be more pertinent according to specific requirements.

The various means for performing certain different functions need not certainly coexist only in the illustrated embodiment but can be present per se in many embodiments, including ones that are not illustrated.

The characteristics described as advantageous, convenient or the like may also be omitted or be replaced by equivalents.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A springing device (1), particularly for mattresses (2), comprising a plurality of elastically deformable modules (3), which are arranged longitudinally and mutually side-by-side so as to form a plurality of contiguous rows, which are mutually connected, in a direction that runs transversely to the deformation direction of said modules, by way of rigid interconnection means, **characterized in that** said interconnection means are arranged alternately and in echelon formation in plan view.

2. The springing device according to claim 1, **characterized in that** each one of said modules (3) has a first central body (4) that forms an axial seat (5) that is open at its ends (6a, 6b) and with which elastic supporting means (12a, 12b) are rigidly coupled.

3. The springing device according to claims 1 and 2, **characterized in that** said first central body (4) is shaped approximately like a parallelepiped so as to form a substantially square plan shape for said axial seat (5).

4. The springing device according to claims 1 and 3, **characterized in that** two pairs of first and second holes (8a, 8b) are formed in two first mutually opposite side walls (7a, 7b) of said first central body (4), are adjacent to said ends (6a, 6b) and have, in pairs, the same axis, said first side walls (7a, 7b) being provided internally, on first surfaces (9a, 9b), with longitudinal grooves (10a, 10b) that run respectively from said ends (6a, 6b) to said pairs of first holes (8a, 8b), said first central body (4) comprising second upper and lower walls 11a, 11b), which are perpendicular to said first walls (7a, 7b), and to which said elastic supporting means (12a, 12b) are rigidly coupled.

5. The springing device according to one or more of the preceding claims, **characterized in that** said elastic supporting means (12a, 12b) are constituted by elastic bodies that have an approximately figure-of-eight front profile so as to form first and second cavities (13a, 13b) that run along the longitudinal axis of said first central body (4), said elastic bodies being mirror-symmetrical with respect to a central plane that is longitudinal with respect to said first central body (4).

6. The springing device according to claims 1 and 5, **characterized in that** each one of said elastic bodies is constituted by two approximately V-shaped wings (15a, 15b), in which the vertex is directed outward, a first end of said wings (15a, 15b) being associated with the edges of said first central body (4) and a second end thereof being connected to a transverse tension element (16) and to a dome (17) that is approximately shaped like an inverted letter U.

7. The springing device according to claims 1 and 6, **characterized in that** said dome (17) has an approximately flat base (17a), with an approximately circular plan shape, in order to increase the contact surface for a first layer of elastically deformable material (18) that is arranged inside a case (19) that constitutes said mattress (2).

8. The springing device according to one or more of the preceding claims, **characterized in that** each one of said modules (3) is obtained by molding recyclable plastic material, such as polyurethane.

9. The springing device according to one or more of the preceding claims, **characterized in that** said rigid interconnection means (20) are constituted by a connecting element, which has an approximately H-like plan shape and is constituted by a second central body (21), to the ends of which two second arms (22a, 22b) are connected at right angles approximately in the central region.

10. The springing device according to claims 1 and 9, **characterized in that** said second arms (22a, 22b) can be inserted partially and locked temporarily within said seat (5) of said first central body (4) of one of said modules (3).

11. The springing device according to claims 1 and 10, **characterized in that** said second central body (21) and said second arms (22a, 22b) have a cross-section that is approximately shaped like a double T arranged opposite with respect to the stem.

12. The springing device according to one or more of the preceding claims, **characterized in that** said second arms (22a, 22b) have, at axes that are perpendicular to axes that are longitudinal to said second central body (21) and are adjacent to the region for interconnection to said second central body (21), eight pairs of lugs (23a, 23b, 23c, 23d, 23e, 23f, 23g, 23h), which are shaped approximately like a right-angled trapezoid and protrude from the edges of said second arms (22a, 22b) approximately at right angles to the plane of arrangement of said connecting element (20).

13. The springing device according to claims 1 and 12, **characterized in that** four pairs of approximately cylindrical studs (24a, 24b, 24c, 24d) protrude from said second arms (22a, 22b) at axes that are longitudinal to said second central body (21) and adjacent to the axes of arrangement of said pairs of lugs (23a, 23b, 23c, 23d, 23e, 23f, 23g, 23h), and protrude from the opposite lateral surfaces of each one of said second arms (22a, 22b).

14. The springing device according to claims 1 and 13, **characterized in that** each stud of said four pairs of studs (24a, 24b, 24c, 24d) has a shape that allows it to be inserted temporarily with a snap action within a chosen first or second hole among said pairs of first and second holes (8a, 8b) formed in said first lateral walls (7a, 7b) of said first central body (4), the height of said four pairs (24a, 24b, 24c, 24d) of studs being greater than the thickness of said first lateral walls of said first central body (4), the diameter of said studs being approximately equal to the width of said longitudinal grooves (10a, 10b) formed in said first central body (4).

15. The springing device according to one or more of the preceding claims, **characterized in that** said connecting element (20) is obtained by molding a recyclable plastic material.

16. The device according to one or more of the preceding claims, **characterized in that** each one of said modules (3) is connected to one or two of said separate connecting elements (20).

17. The device according to one or more of the preceding claims, **characterized in that** said connecting elements (20) are arranged so that they are sequentially staggered and therefore so that said second central bodies (21) are on opposite sides with respect to the longitudinal axis of the first central body (4) of the module (3) to which they are fixed, so as to form a springing device that has a substantially echelon-like structure.

18. The device according to claims 1 and 17, **characterized in that** said echelon-like structure is constituted by two or more parallel rows of various modules (3), in which said first central bodies (4) are equidistant on a same axis Y and are connected, between adjacent rows, in pairs by second arms (22a,22b) of a connecting element (20) that is arranged along an axis X that is perpendicular to said axis Y, the interconnection between rows of mutually adjacent modules being obtained, along said transverse axis X, by way of connecting elements (20) that a arranged alternately, and therefore alternately provided and omitted, at said axis X and at said axis Y.

## Patentansprüche

1. Federungsvorichtung (1), insbesondere für Matratzen (2), umfassend mehrere elastisch verformbare Module (3), die längs verlaufend und Seite an Seite zueinander zum Ausbilden mehrerer angrenzender Reihen angeordnet sind und in einer Richtung, die quer zur Verformungsrichtung der Module verläuft, durch starre Verbindungsmittel miteinander verbunden sind, **dadurch gekennzeichnet, dass** die Verbindungsmittel in Draufsicht abwechselnd und in Staffelform angeordnet sind.

2. Federungsvorrichtung nach Anspruch 1, **dadurch gekennzeichnet, dass** jedes der Module (3) einen ersten mittleren Körper (4) aufweist, der einen axialen Sitz (5) ausbildet, welcher an seinen Enden (6a, 6b) offen ist, und mit welchem elastische Stützmittel (12a, 12b) starr verkuppelt sind.

3. Federungsvorrichtung nach einem der Ansprüche 1 oder 2, **dadurch gekennzeichnet, dass** der erste mittlere Körper (4) ungefähr wie ein Parallelflach geformt ist, um eine im Wesentlichen vierkantige Grundrissform für den axialen Sitz (5) auszubilden.

4. Federungsvorrichtung nach einem der Ansprüche 1 bis 3, **dadurch gekennzeichnet, dass** zwei Paare erster und zweiter Löcher (8a, 8b) in zwei ersten, einander gegenüberliegenden Seitenwänden (7a, 7b) des ersten mittleren Körpers (4) ausgebildet sind, den Enden (6a, 6b) benachbart sind und in Paaren dieselbe Achse aufweisen, wobei die ersten Seitenwände (7a, 7b) innen auf ersten Oberflächen (9a, 9b) mit Längsnuten (10a, 10b) versehen sind, die jeweils von den Enden (6a, 6b) zu den Paaren erster Löcher (8a, 8b) verlaufen, wobei der erste mittlere Körper (4) zweite obere und untere Wände (11a, 11b) umfasst, die zu den ersten Wänden (7a, 7b) senkrecht stehen, und an die die elastischen Stützmittel (12a, 12b) starr gekuppelt sind.

5. Federungsvorrichtung nach einem oder mehreren der vorhergehenden Ansprüche, **dadurch gekennzeichnet, dass** die elastischen Stützmittel (12a, 12b) durch elastische Körper gebildet sind, die ein ungefähr 6-förmiges Frontprofil aufweisen, sodass sie erste und zweite Hohlräume (13a, 13b) ausbilden, die die Längsachse des ersten mittleren Körpers (4) entlang verlaufen, wobei die elastischen Körper bezüglich einer Mittelebene spiegelsymmetrisch sind, die längs bezüglich des ersten mittleren Körpers (4) verläuft.

6. Federungsvorrichtung nach Anspruch 1 und 5, **dadurch gekennzeichnet, dass** jeder der elastischen Körper durch zwei ungefähr V-förmige Flügel (15a, 15b) gebildet ist, bei denen der Scheitel nach außen gerichtet ist, wobei ein erstes Ende der Flügel (15a, 15b) den Kanten des ersten mittleren Körpers (4) zugeordnet ist und ein zweites Ende davon mit einem quer verlaufenden Spannelement (16) und einer Kuppel (17) verbunden ist, die ungefähr wie ein umgekehrtes U geformt ist.

7. Federungsvorrichtung nach Anspruch 1 und 6, **dadurch gekennzeichnet, dass** die Kuppel (17) eine ungefähr flache Basis (17a) mit einer kreisförmigen Grundrissfläche aufweist, um die Kontaktfläche für eine erste Schicht von elastisch verformbarem Material (18) zu vergrößern, das innerhalb einer Hülle (19) angeordnet ist, die die Matratze (2) bildet.

8. Federungsvorrichtung nach einem oder mehreren der vorhergehenden Ansprüche, **dadurch gekennzeichnet, dass** jedes der Module (3) durch Formen von wiederverwertbarem Kunststoffmaterial, wie etwa Polyurethan, erhalten ist.

9. Federungsvorrichtung nach einem oder mehreren der vorhergehenden Ansprüche, **dadurch gekennzeichnet, dass** die starren Verbindungsmittel (20) durch ein Verbindungselement gebildet sind, das eine ungefähr H-artige Grundrissform aufweist und durch einen zweiten mittleren Körper (21) gebildet ist, mit dessen Enden zwei zweite Arme (22a, 22b) rechtwinklig ungefähr im mittleren Bereich verbunden sind.

10. Federungsvorrichtung nach Anspruch 1 und 9, **dadurch gekennzeichnet, dass** die zweiten Arme (22a, 22b) teilweise in den Sitz (5) des ersten mittleren Körpers (4) von einem der Module (3) eingeführt und vorübergehend darin gesperrt sein können.

11. Federungsvorrichtung nach Anspruch 1 und 10, **dadurch gekennzeichnet, dass** der zweite mittlere Körper (21) und die zweiten Arme (22a, 22b) einen Querschnitt aufweinen, der ungefähr wie ein doppeltes T geformt ist, die bezüglich des Stamms gegenüberliegend angeordnet sind.

12. Federungsvorrichtung nach einem oder mehreren der vorhergehenden Ansprüche, **dadurch gekennzeichnet, dass** die zweiten Arme (22a, 22b) an Achsen, die senkrecht zu Achsen stehen, welche längs zu dem zweiten mittleren Körper (21) verlaufen und dem Bereich für die Verbindung mit den zweiten mittleren Körper (21) benachbart sind, acht Paare von Nasen (23a, 23b, 23c, 23d, 23e, 23f, 23g, 23h) aufweisen, die ungefähr wie ein rechtwinkliges Trapezoid geformt sind und ungefähr rechtwinklig zur Anordnungsebene des Verbindungselements (20) von den Kanten der zweiten Arme (22a, 22b) vorstehen.

13. Federungsvorrichtung nach Anspruch 1 und 12, **dadurch gekennzeichnet, dass** vier Paare von ungefähr zylindrischen Ansätzen (24a, 24b, 24c, 24d) von den zweiten Armen (22a, 22b) an Achsen, die längs zu dem zweiten mittleren Körper (21) verlaufen und den Anordnungsachsen der Paaren von Nasen (23a, 23b, 23c, 23d, 23e, 23f, 23g, 23h) benachbart sind, vorstehen und von den gegenüberliegenden Seitenflächen von jedem der zweiten Arme (22a, 22b) vorstehen.

14. Federungsvorrichtung nach Anspruch 1 oder 13, **dadurch gekennzeichnet, dass** jeder Ansatz der vier Paare von Ansätzen (24a, 24b, 24c, 24d) eine Form aufweist, die seine vorübergehende Einführung mit Schnappwirkung innerhalb eines gewählten ersten oder zweiten Lochs aus den Paaren von ersten und zweiten Löchern (8a, 8b), die in den ersten Seitenwänden (7a, 7b) des ersten mittleren Körpers (4) ausgebildet sind, ermöglicht, wobei die Höhe der vier Paare von Ansätzen (24a, 24b, 24c, 24d) größer als die Stärke der ersten Seitenwände des ersten mittleren Körpers (4) ist, wobei der Durchmesser der Ansätze ungefähr gleich der Breite der Längsnute (10a, 10b) ist, die in dem ersten mittleren Körper (4) ausgebildet sind.

15. Federungsvorrichtung nach einem oder mehreren der vorhergehenden Ansprüche, **dadurch gekennzeichnet, dass** das Verbindungselement (20) durch Formen eines wiederverwertbaren Kunststoffmaterials erhalten ist.

16. Federungsvorrichtung nach einem oder mehreren der vorhergehenden Ansprüche, **dadurch gekennzeichnet, dass** jedes der Module (3) mit einem oder zwei der separaten Verbindungselemente (20) verbunden ist.

17. Federungsvorrichtung nach einem oder mehreren der vorhergehenden Ansprüche, **dadurch gekennzeichnet, dass** die Verbindungselemente (20) derart angeordnet sind, dass sie sequenzieli versetzt sind, und daher derart, dass sich die zweiten mittleren Körper (21) auf gegenüberliegenden Seiten bezüglich der Längsachse des ersten mittleren Körpers (4) des Moduls (3) befinden, an dem sie befestigt sind, um eine Federungsvorrichtung auszubilden, die eine im Wesentlichen gestaffelte Struktur aufweist.

18. Federungsvorrichtung nach Anspruch 1 und 17, **dadurch gekennzeichnet, dass** die staffelartige Struktur durch zwei oder mehr parallele Reihen von mehreren Modulen (3) gebildet ist, bei denen die ersten mittleren Körper (4) auf derselben Achse Y abstandsgetreu sind und zwischen benachbarten Reihen in Paaren durch zweite Arme (22a, 22b) eines Verbindungselements (20) verbunden sind, das entlang einer Achse X angeordnet ist, welche senkrecht zu der Achse Y steht, wobei die Verbindung zwischen Reihen von zueinander benachbarten Modulen entlang der Querachse X durch Verbindungselemente (20) erreicht ist, die an der Achse X und an der Achse Y abwechselnd angeordnet, und daher abwechselnd vorgesehen und ausgelassen, sind.

## Revendications

1. Dispositif élastique (1), en particulier pour des matelas (2), comprenant une pluralité de modules déformables élastiquement (3), qui sont disposés longitudinalement et mutuellement côte-à-côte de façon à former une pluralité de rangées contiguës, qui sont mutuellement reliées, dans une direction qui s'étend transversalement par rapport à la direction de déformation desdits modules, à l'aide de moyens d'interconnexion rigides, **caractérisé en ce que** lesdits moyens d'interconnexion sont disposés en alternance et selon une formation en échelons, en vue en plan.

2. Dispositif élastique selon la revendication 1, **caractérisé en ce que** chacun desdits modules (3) comporte un premier corps central (4) qui forme un siège axial (5) qui est ouvert à ses extrémités (6a, 6b) et auquel des moyens de support élastiques (12a, 12b) sont rigidement couplés.

3. Dispositif élastique selon les revendications 1 et 2, **caractérisé en ce que** ledit premier corps central (4) est conformé approximativement à la façon d'un parallélépipède de façon à former une forme plane sensiblement carrée pour ledit siège axial (5).

4. Dispositif élastique selon les revendications 1 et 3, **caractérisé en ce que** deux paires de premiers et deuxièmes trous (8a, 8b) sont formées dans deux premières parois latérales mutuellement opposées (7a, 7b) dudit premier corps central (4), sont adjacentes auxdites extrémités (6a, 6b), et ont, par paires, le même axe, lesdites premières parois latérales (7a, 7b) étant munies intérieurement, sur des premières surfaces (9a, 9b), de gorges longitudinales (10a, 10b) qui s'étendent respectivement à partir desdites extrémité (6a, 6b) vers lesdites paires de premiers trous (8a, 8b), ledit premier corps central (4) comprenant des deuxièmes parois supérieure et inférieure (11a, 11b), qui sont perpendiculaires auxdites premières parois (7a, 7b), et auxquelles lesdits moyens de support élastiques (12a, 12b) sont rigidement couplés.

5. Dispositif élastique selon l'une ou plusieurs des revendications précédentes, **caractérisé en ce que** lesdits moyens de support élastiques (12a, 12b) sont constitués par des corps élastiques qui ont un profil avant approximativement en forme de huit, de façon à former des première et deuxième cavités (13a, 13b) qui s'étendent le long de l'axe longitudinal dudit premier corps central (4), lesdits corps élastiques ayant une symétrie de miroir par rapport à un plan central qui est longitudinal par rapport audit premier corps central (4).

6. Dispositif élastique selon les revendications 1 et 5, **caractérisé en ce que** chacun desdits corps élastiques est constitué par deux ailes approximativement en forme de V (15a, 15b), dans lesquelles le sommet est dirigé vers l'extérieur, une premier extrémité desdites ailes (15a, 15b) étant associée aux bords dudit corps central (4) et une deuxième extrémité de celles-ci étant reliée à un élément de tension transversal (16) et à un dôme (17) qui est approximativement en forme de lettre U inversée.

7. Dispositif élastique selon l'une quelconque des revendications 1 et 6, **caractérisé en ce que** ledit dôme (17) a une base approximativement plate (17a), avec une forme en plan approximativement circulaire, de façon à augmenter la surface de contact pour une première couche de matériau élastiquement déformable (18) qui est disposée à l'intérieur d'une enveloppe (19) qui constitue ledit matelas (2).

8. Dispositif élastique selon l'une ou plusieurs des revendications précédentes, **caractérisé en ce que** chacun desdits modules (3) est obtenu par moulage d'une matière plastique recyclable, telle que du polyuréthane.

9. Dispositif élastique selon l'une ou plusieurs des revendications précédentes, **caractérisé en ce que** lesdits moyens d'interconnexion rigides (20) sont constitués par un élément de liaison, qui a une forme en plan en forme de H et qui est constitué par un deuxième corps central (21), aux extrémités duquel deux deuxièmes bras (22a, 22b) sont reliés à angle droit approximativement dans la région centrale.

10. Dispositif élastique selon les revendications 1 et 9, **caractérisé en ce que** lesdits deuxièmes bras (22a, 22b) peuvent être insérés partiellement et verrouillés temporairement à l'intérieur dudit siège (5) dudit premier corps central (4) de l'un desdits modules (3).

11. Dispositif élastique selon les revendications 1 et 10, **caractérisé en ce que** ledit deuxième corps central (21) et lesdits deuxièmes bras (22a, 22b) ont une section transversale qui est approximativement en forme d'un double T disposé de façon opposée par rapport à la tige.

12. Dispositif élastique selon l'une ou plusieurs des revendications précédentes, **caractérisé en ce que** lesdits deuxièmes bras (22a, 22b) comportent, au niveau d'axes qui sont perpendiculaires à des axes qui sont longitudinaux par rapport audit deuxième corps central (21) et qui sont adjacents à la région pour l'interconnexion avec ledit deuxième corps central (21), huit paires de pattes (23a, 23b, 23c, 23d, 23e, 23f, 23g, 23h), qui sont approximativement en forme de trapèze rectangle et qui font saillie à partir des bords desdits deuxièmes bras (22a, 22b) approximativement à angle droit par rapport au plan de disposition dudit élément de liaison (20).

13. Dispositif élastique selon les revendications 1 et 12, **caractérisé en ce que** quatre paires de goujons approximativement cylindriques (24a, 24b, 24c, 24d) font saillie à partir desdits deuxièmes bras (22a, 22b) au niveau d'axes qui sont longitudinaux par rapport audit deuxième corps central (21) et qui sont adjacents aux axes de disposition desdites paires de pattes (23a, 23b, 23c, 23d, 23e, 23f, 23g, 23h), et qui font saillie à partir des surfaces latérales opposées de chacun desdits deuxièmes bras (22a, 22b).

14. Dispositif élastique selon les revendications 1 et 13, **caractérisé en ce que** chaque goujon desdites quatre paires de goujons (24a, 24b, 24c, 24d) a une forme qui lui permet d'être inséré temporairement avec une action d'encliquetage à l'intérieur d'un premier ou deuxième trou choisi parmi lesdites paires de premiers et deuxièmes trous (8a, 8b) formés dans lesdites premières parois latérales (7a, 7b) dudit premier corps central (4), la hauteur desdits quatre paires (24a, 24b, 24c, 24d) des goujons étant supérieure à l'épaisseur desdites premières parois latérales dudit premier corps central (4), le diamètre desdits goujons étant approximativement égal à la largeur desdites gorges longitudinales (10a, 10b) formées dans ledit premier corps central (4).

15. Dispositif élastique selon l'une ou plusieurs des revendications précédentes, **caractérisé en ce que** ledit élément de liaison (20) est obtenu par moulage d'une matière plastique recyclable.

16. Dispositif selon l'une ou plusieurs des revendications précédentes, **caractérisé en ce que** l'un desdits modules (3) est relié à un ou à deux desdits éléments de liaison séparés (20).

17. Dispositif selon l'une ou plusieurs des revendications précédentes, **caractérisé en ce que** lesdits éléments de liaison (20) sont disposés de telle sorte qu'ils soient étagés en séquence, et que, par conséquent, lesdits deuxièmes corps centraux (21) se trouvent sur des côtés opposés par rapport à l'axe longitudinal du premier corps central (4) du module (3) auquel ils sont fixés, de façon à former un dispositif élastique qui a une structure sensiblement en forme d'échelons.

18. Dispositif selon les revendications 1 et 17, **caractérisé en ce que** ladite structure en forme d'échelons est constituée par deux ou plusieurs rangées parallèles de différents modules (3), lesdits premiers corps centraux (4) étant équidistants sur un même axe Y et étant reliés, entre des rangées adjacentes, par paires par des deuxièmes bras (22a, 22b) d'un élément de liaison (20) qui est disposé le long d'un axe X qui est perpendiculaire audit axe Y, l'interconnexion entre des rangées de modules mutuellement adjacents étant obtenue, le long dudit axe transversal X, à l'aide d'éléments de liaison (20) qui sont disposés en alternance, et, par conséquent, disposés et omis en alternance, sur ledit axe X et ledit axe Y.
